# EUROPEAN PATENT APPLICATION

(11) **EP 2 735 900 A1**
(43) Date of publication of application: **28.05.2014**
(21) Application number: 12193543.1
(22) Date of filing: 21.11.2012
(51) Int. Cl.: G02B 7/00, G02B 7/02

(54) **Support mechanism for an optical element and method for adjusting an optical element**

(71) Applicant: High Q Laser GmbH, 6830 Rankweil (AT)
(72) Inventor: Huber, Roland, 6841 Mäder (AT)
(74) Representative: Harmann, Bernd-Günther

(57) **Abstract**

The invention pertains to a support mechanism for holding and adjusting an optical element (2), the support mechanism comprising a mounting frame (1) having a hollow-cylindrical opening (10) with a first end and a second end for accommodating the optical element (2), characterized by a thread screw (14) at the first end of the opening (10), a circular clamping nut (4) having an external thread, designed for being threaded onto the thread screw (14), and a circular collet (3) having a first part (31) for holding the optical element (2) and a second part (32) with a multitude of collet jaws (33), wherein the clamping nut (4) and the collet (3) are designed for being positioned in the opening (10) in such a way that the optical element (2) is held fixedly in the collet (3), and a tilt orientation of the optical element (2) is adjustable by rotating the collet (3) and fixable. The invention also pertains to a method for positioning and orienting an optical element (2) in a mounting frame (1).

## Description

The present invention pertains to a method and a support mechanism for precisely adjusting a position and orientation of an optical element with respect to an optical axis of a beam path, in particular for use in a laser arrangement.

Such support mechanisms are used for coupling optical elements to a mechanical assembly. They are required, for example, for lenses but also for optical elements of all types, such as mirrors for laser devices. In many applications comprising optical systems an adjustment of the single optical elements such as lenses, mirrors or prisms has to be extremely accurate. In particular if interferometry is involved, the accuracy has to be precise down to the fraction of a wavelength. A general problem with such mounts is that the rotational symmetry of mounted optical systems can be impaired.

Ultra-short pulse laser systems, i.e. laser arrangements which are capable of producing or amplifying laser pulses having a characteristic pulse duration in the femto- or picosecond range, have long been known in various embodiments from the prior art, femtosecond and picosecond lasers being used in a growing number of applications of various types. A laser arrangement of this kind is disclosed, for instance, in the European patent application EP 2 284 965. Such laser systems use cavities or laser resonators having two mirror elements defining the beam path and a laser medium. Here, mode-coupled femtosecond and picosecond lasers use as a rule a so-called extended cavity with a multiplicity of mirror elements for beam guidance, folding of the beam path ensuring the desired compactness of the design. Such a design is relevant in particular when the pulse repetition frequency is to lie in the MHz range, for example in the case of a typical pulse repetition frequency in the range of 1 to 120 MHz. Such a repetition frequency requires, for maintenance of a practicable compactness, the use of such an extended cavity with two or more deflecting or folding mirrors which have a curvature or may be designed to be planar.

Typical resonators of such laser arrangements have a sensitivity of 50 µrad in the case of some elements, i.e. in the case of (undesired) tilting of an element out of the optimum state by this angle, a marked loss of performance of several percent results.

Thus, there is a need for a support mechanism and a method for highly precisely and reliably arranging a position and orientation of an optical element.

Various different kinds of support mechanisms for optical elements are known from prior art and disclosed, for instance, in the documents US 6,016,230, DE 3 531 640 or DE 10 2008 039 788.

In some known systems a keyed optical element is adjusted by rotating it inside of a mount. In order to fix the adjusted orientation of the optical element subsequently to the adjustment, the optical element is pressed against an abutment by means of a spring force or a defined momentum. This solution has three main disadvantages. First of all, the shock resistance of such a mechanism is rather low, so that the adjustment can easily be lost through shocks or vibration. Second, the adjustment of the optical element can be lost also because of the pressing. And third, the optical element is only badly accessible for the adjustment procedure.

It is therefore an object of the present invention to provide an improved support mechanism and method for precisely adjusting a position and orientation of an optical element with respect to an optical axis of a beam path and fixing the adjusted position and orientation.

It is a particular object of the invention to provide such a support mechanism that offers a good accessibility for the adjustment procedure, in particular allowing a motorized adjustment of an optical element's position and orientation.

Another object is the provision of such a support mechanism with low constructional and material costs, in particular comprising a small number of components.

It is a further object to provide such a support mechanism which has increased robustness and stability, offering a stable and shock-resistant adjustment of an optical element's position and orientation.

A further object is the provision of such a support mechanism which has increased robustness and stability of the performance parameters even over relatively long periods.

At least one of these objects is achieved by the support mechanism according to Claim 1, the method for positioning and orienting an optical element according to Claim 9 and/or the dependent claims of the present invention.

According to the present invention, an optical element having a circular cross-section is held in a hollow-cylindrical opening of a mounting frame by means of a collet. The optical element in particular is or comprises an optical lens, a mirror or a prism for use in laser arrangements and applications. An adjustment of the optical element's tilt orientation is carried out by rotating the collet inside the hollow-cylindrical opening. The optical element inside of the collet follows the rotational movement of the collet. An adjustment of the optical element's position in the collet is carried out by a clamping of the collet by means of a clamping nut.

The mounting frame is attachable to a surface, in particular a surface of a laser arrangement, for instance by means of screws, bolts, glue etc. In a preferable embodiment of the invention the mounting frame is made of aluminium and the hollow-cylindrical opening is a circular boring. The mounting frame, in particular the hollow-cylindrical opening, preferably is hard-wearing, particularly hard anodised or ceramic-coated.

According to the invention the opening of the mounting frame has a first end and a second end, wherein a thread screw is located at the first end. Preferably, in between the first end and the second end the opening has a hollow-cylindrical surface for accommodating the collet. Preferably, a conical necking is provided at the second end, being designed for blocking the collet and to act as a counterpart for the collet jaws. Naturally, the opening of the mounting frame need not be completely hollow cylindrical. For instance, the hollow cylinder need not be closed completely but can have a lateral opening or several longitudinal slots, in particular for reducing material costs or weight. Also, the opening may comprise two or more hollow cylinders of different diameters.

According to the invention the collet comprises a multitude of collet jaws and is designed for at least loosely holding the optical element in a circular opening, preferably with at least one degree of freedom. A taper key preferably can be provided in the collet that causes the optical element to follow rotational movements of the collet. The collet jaws are designed to interact with a counterpart of the mounting frame in such a way that applying an axial pressure on the collet pushes the optical element into a determined position. The collet is designed in such a way that applying a radial pressure on the collet clamps optical element inside the collet, thus fixing a position of the optical element. Preferably, the collet is made of hardened steel, particularly vacuum hardened.

Furthermore according to the invention, a ring-shaped circular clamping nut with an external thread is threadable onto a thread screw of the opening of the mounting frame for holding the collet with the optical element in the opening and for applying pressure on the collet in order to position the optical element and/or to fix a position of the optical element. In a preferred embodiment the clamping nut is designed in such a way that, when the clamping nut is tightened on the thread screw, a surface of the clamping nut is positioned flush with a surface of the mounting frame. Preferably, this surface has a plurality of depression or elevation features, in particular designed for being engaged by a tool or an apparatus for rotating the clamping nut.

In a preferable embodiment of the invention the clamping nut and the collet with the optical element form a cavity inside the opening of the mounting frame. Preferably, this cavity is fillable with an immobilizing agent, such as a liquid adhesive. Advantageously, a radial boring to the cavity is provided in the mounting frame, allowing filling the immobilizing agent into the cavity after the collet and the clamping nut have been inserted into the opening.

The invention in the following will be described in detail by referring to exemplary embodiments that are accompanied by figures, in which:
- Fig. 1a: shows an exemplary embodiment of a support mechanism according to the invention with a mounting frame having a circular boring accommodating an optical element;
- Fig. 1b: shows the mounting frame of Fig. 1a with details of the circular boring;
- Fig. 2: shows an exemplary embodiment of a collet of the support mechanism according to the invention in a side view, in a cross-sectional view and in a front view;
- Fig. 3a: shows the insertion of an optical element into the collet of Fig. 2;

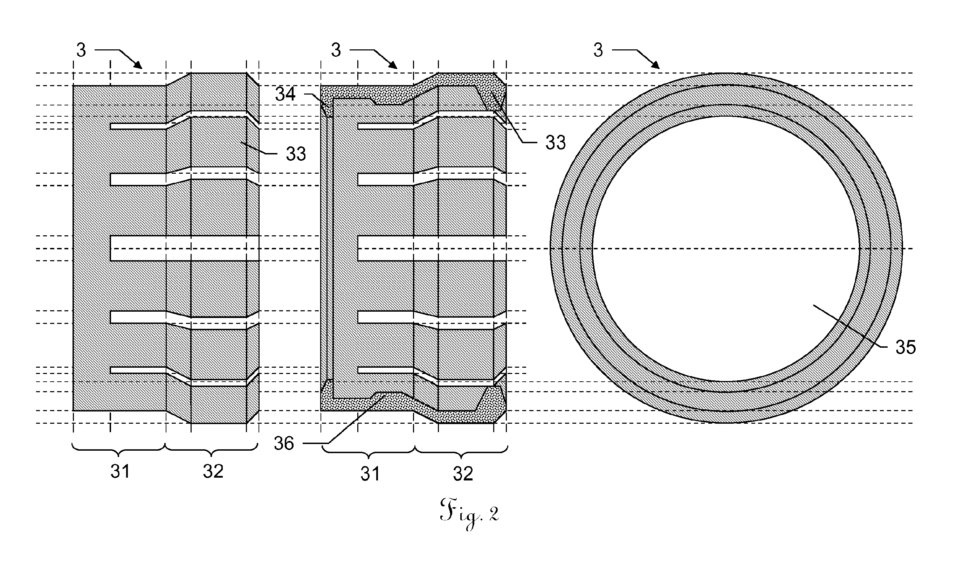

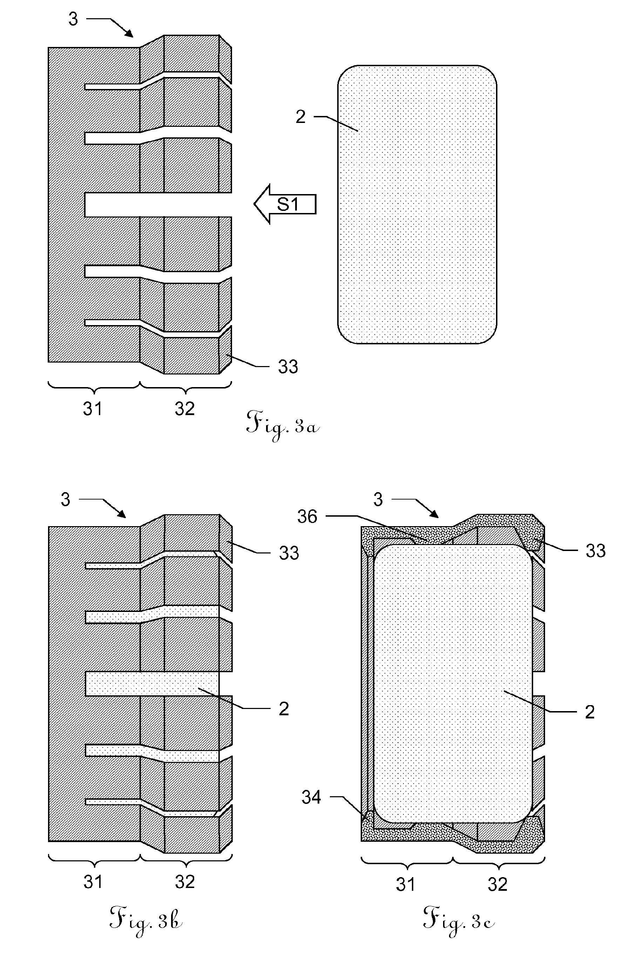

- Figs. 3a-b: show the collet of Fig. 2 with an inserted optical element in a side view and in a cross-sectional view;

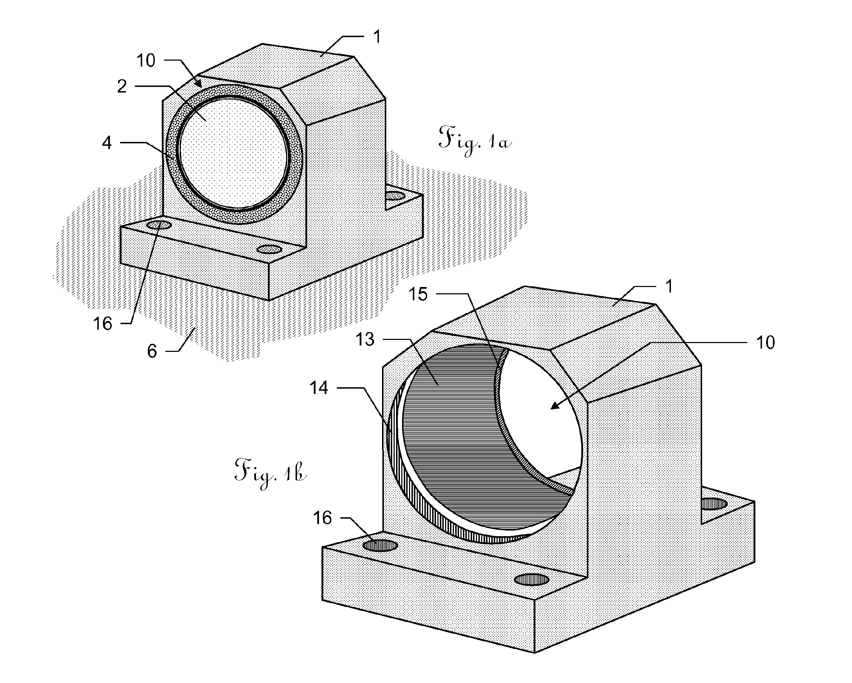

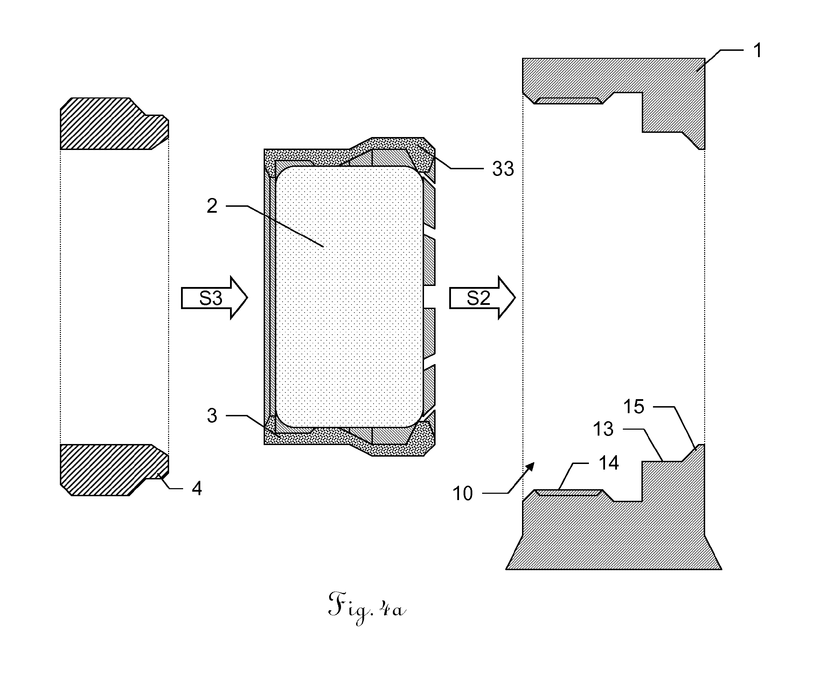

- Fig. 4a: shows the assembly of the components of the support mechanism of Fig. 1a;

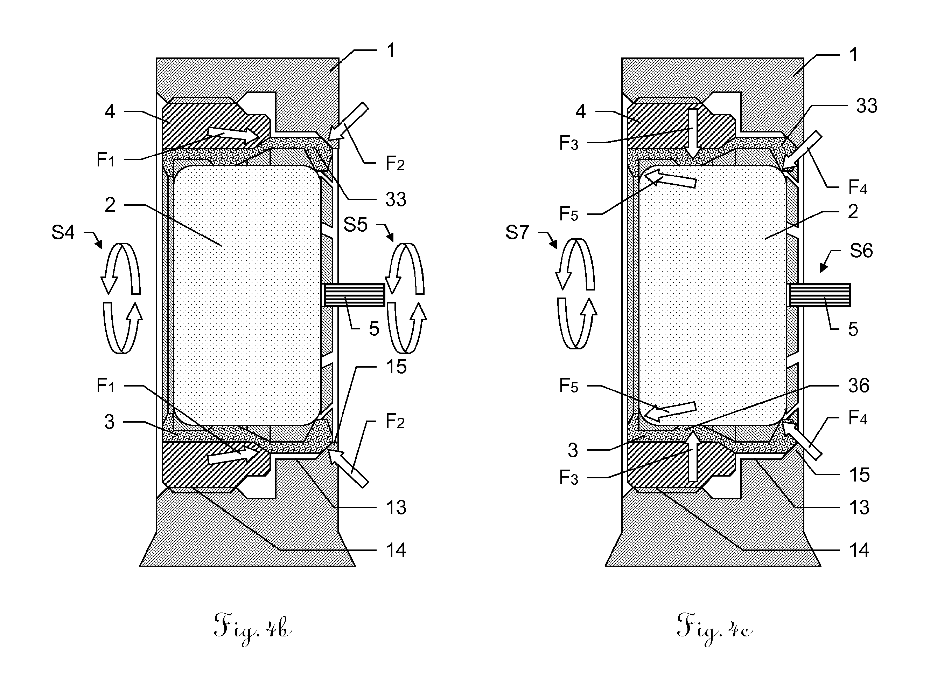

- Figs. 4b-c: show the support mechanism of Fig. 1a in a cross-sectional view with an illustration of the exerted pressure forces;

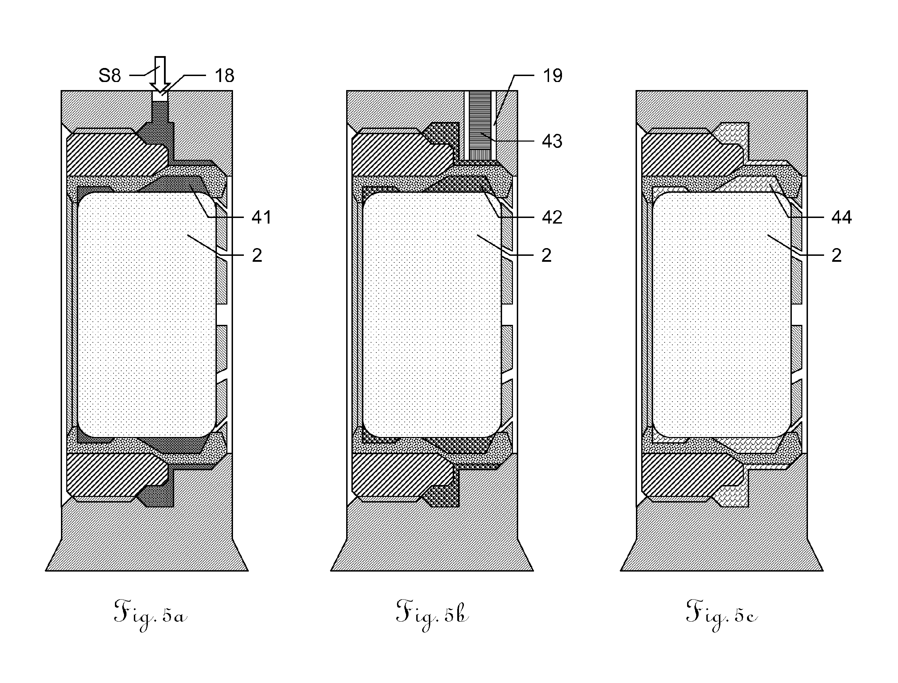

- Figs. 5a-c: show three exemplary embodiments of a support mechanism according to the invention having different means for fixation of the optical element;

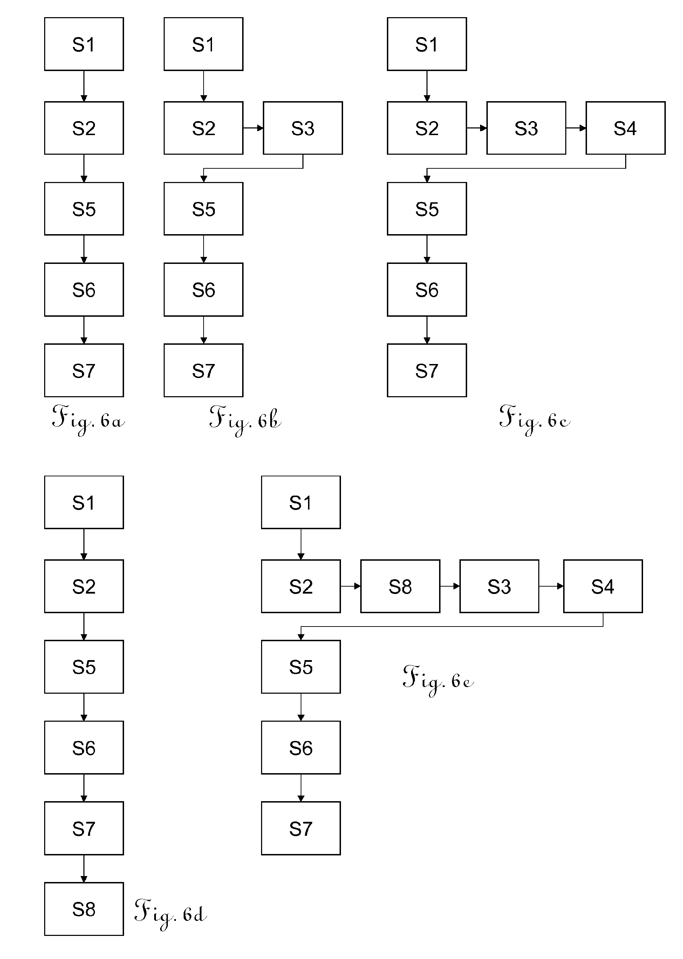

- Figs. 6a-e: show five flow diagrams illustrating preferable embodiments of the method according to the invention; and

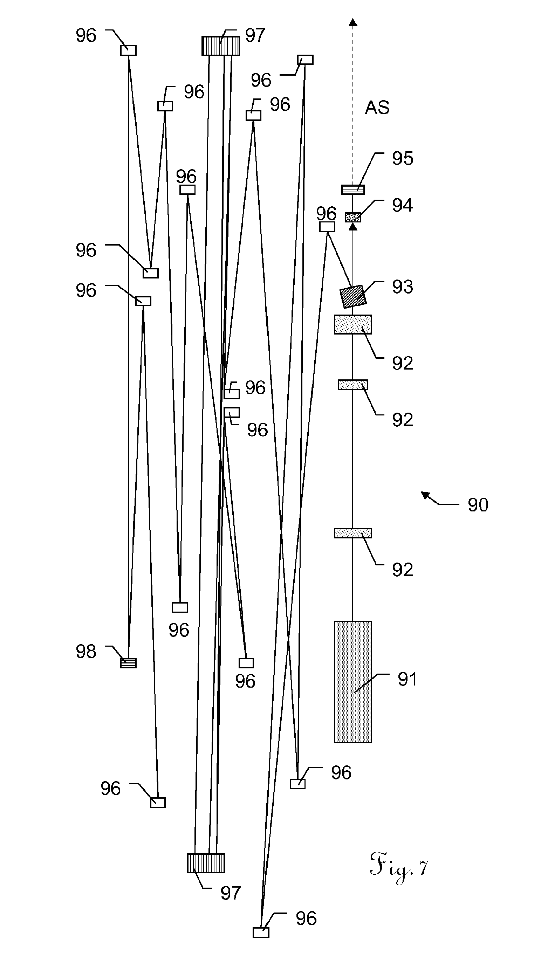

- Fig. 7: shows the schematic diagram of a laser arrangement.

In Figure 1a an exemplary embodiment of a support mechanism according to the invention is depicted. The support mechanism comprises a mounting frame 1 having a circular boring 10 as a basically hollow cylindrical opening for accommodating an optical element 2. The optical element 2 is held by a collet (not shown), which is held in its place by a ring-shaped circular clamping nut 4. The clamping nut 4 comprises an external thread, designed for being threaded onto a thread screw of the circular boring 10.

The mounting frame 1 is designed to be positioned in a beam path and to be fixed to a surface 6 by attaching means 16, here provided as four screws. For example, the mounting frame 1 can be mounted on a base component or base plate of a laser arrangement, the base component or the base plate in particular having at least one further optical element.

Figure 1b shows the mounting frame 1 of Figure 1a and its circular boring 10. The depicted circular boring 10 comprises three features. In the centre of the boring there is an accommodation area 13 with a hollow cylinder surface for accommodating the optical element 2. At the far end a conical necking 15 is provided for preventing a transit of the collet or the optical element 2 through this far end. At the other end a thread screw 14 is provided for accepting the circular clamping nut 4. At least the accommodation area 13 of the boring is hard-wearing, e.g. hard anodised or ceramic-coated.

Figure 2 shows three views of an exemplary embodiment of the collet 3 of the support mechanism. On the left a side view is shown, in the middle a cross-sectional view and on the right a front view.

The collet 3 is shaped circularly with a basically cylindrical opening 35 for holding a likewise cylindrical optical element 2. The collet 3 has a first part 31 and a second part 32.

The first part 31 is basically cylindrically and has a diameter into which the optical element 2 can be fed in. The first part 31 comprises a circular contact area 36 for contacting the optical element 2 and a necked throat 34 for blocking a transit of the optical element 2 beyond this end of the collet.

The second part 32 comprises a multitude of collet jaws 33. The collet jaws 33 are arranged and designed in such a way that the optical element 2 is prevented from leaving the collet 3 autonomously at the second part 32. Also, there are clearances between the tips of the collet jaws 33 into which a forklike tool is insertable.

In Figure 3a the first step S1 of a preferable embodiment of the method according to the invention is illustrated: the insertion of an optical element 2 into the collet 3. The optical element 2 is inserted into the collet 3 through the opening formed by the tips of the collet jaws 33 until it comes to a rest on the necked throat 34 and the circular contact surface 36.

Figures 3b and 3c show the collect chuck 3 with the optical element 2 inserted. In the cross-sectional view of Figure 3c the support of the optical element 2 in the collet 3 is perceivable. The circumferential surface of the optical element 2 is contacted by the circular contact surface 36, loosely supporting the optical element 2 in two dimensions. One of the two circular surfaces of the optical element is contacted by the necked throat 34 in the first part 31 of the collet 3 and the other one is contacted by the tips of the collet jaws 33 in the second part 32. The necked throat 34 and the collet jaws 33 loosely support the optical element 2 in the third dimension.

Though, without a pressure applied on the collet jaws 33 this support is only loosely, the collet jaws 33 in this position block the return path of the optical element 2, so that the optical element 2 stays inside of the collet 3. The collet jaws 33 are designed in such a way that a pressure on their tips is transferable into a pressure against the optical element 2, pushing it against the necked throat.

The first part 31 of the collet 3 is designed in such a way that a uniformly applied circumferential pressure narrows the diameter of the cylindrical opening 35 at the circular contact surface 36, thus supporting the optical element 2 more tightly.

Figures 4a, 4b and 4c illustrate a preferable embodiment of the method for adjusting the optical element 2 according to the invention, showing a preferable support mechanism according to the invention in a cross-sectional view.

Figure 4a shows the steps S2 and S3. First, the collet 3 holding the optical element 2 is positioned in the circular boring 10 of the mounting frame 1 (S2), so that the collet jaws 33 loosely rest on the hollow cylinder surface of the accommodation area 13. Then the ring-shaped circular clamping nut 4 is positioned on the screw thread 14 (S3), the inner diameter of the clamping nut 4 fitting the outer diameter of the first part 31 of the collet 3.

In Figure 4b the clamping nut 4 is loosely fastened on the screw thread 14 (S4), threading in the clamping nut 4 through a rotary motion.

As the clamping nut 4 is threaded partially into the circular boring 10, it is pushed against the collet jaws 33, thus applying a first axial force F₁ to the collet 3. The collet jaws 33 are pushed against the conical necking 15. Due to the special design of the components collet jaws 33, clamping nut 4 and conical necking 15, the collet jaws 33 are squeezed together by a compression force F₂ exerted by the conical necking 15. When the clamping nut 4 is threaded further into the circular boring 10 the collet jaws 33 exert a compressing force F₄ on a chamfered edge of the optical element 2. This force effects a movement of the optical element 2 towards the necking throat 34 with a second axial force F₅. The collet jaws 33 are designed in such a way that a pressure on their tips is transferable into a pressure against the optical element 2, pushing it against the necked throat.

When the optical element 2 is keyed, i.e. the circular contact surface 36 of the collet 3 is inclined with respect to the optical axis, the optical element 2 can be adjusted.

At this stage, the coarsely adjusted mounting frame 1 preferably is attached to a surface 6 for fine-adjustment of the optical element 2.

A tool 5, in particular a forklike tool, having one or more tines, spikes or prongs, is then inserted into one or more clearances between the collet jaws 33 for performing the next step S5 of the method: adjusting a tilt orientation of the keyed optical element 2. The tool 5 is used for rotating the collet 3 in the circular boring 10, in particular around the optical axis of the beam path, until the optical element 2 reaches the desired orientation. The movement of the tool 5 can be motorized.

In Figure 4c, steps S6 and S7 are illustrated. When the optical element 2 is adjusted with respect to the optical axis, the tool 5 holds the collet in its current position and orientation (S6) whilst the clamping nut 4 is threaded further into the circular boring 10 and tightened (S7). This way, the collet 3 is fixed in the circular boring 10 without following the threading movement of the clamping nut 4, so that the tilt orientation of the optical element 2 remains unaffected by the threading and, thus, adjusted.

Additionally, due to the form of the clamping nut 4 and the collet 3, the tightening of the clamping nut 4 (S7) results in a compression of the circular contact surface 36 around the optical element 2 by a radial force F₃. Thus, a defined position and orientation of the optical element 2 with respect to the collet 3 is ensured.

As a result, when the clamping nut 4 is completely threaded in, the collet 3 is positioned fixedly in the circular boring 10, and the optical element 2 is positioned fixedly in the collet 3. The tool 5 can be removed and the adjustment is finished. If not already done so, the mounting frame 1 can now be attached to a surface 6.

The Figures 5a, 5b and 5c show three preferred embodiments of the support mechanism according to the invention in cross-sectional views, each embodiment having different means for immobilization of the optical element 2 subsequent to its adjustment. The optical element 2, the collet 3 and the clamping nut 4 are designed in such a way that when they are arranged in the circular boring 10 a cavity is formed in the circular boring 10. This cavity can be filled with different immobilizing agents. The immobilizing agents can either be used as an alternative way to fix the adjusted tilt position or additionally, in particular subsequently, to the fixing of the tilt position by tightening (S7) the clamping nut 4, as described in Figure 4c.

In Figure 5a the mounting frame 1 has a least one radial boring 18 connecting the cavity with the outer surface of the mounting frame 1. Through this radial boring 18 the cavity can be filled (S8) with a liquid adhesive 41 in order to fix the optical element 2 and the other components after the adjustment.

Also in Figure 5b the mounting frame 1 has at least one radial boring 19 connecting the cavity with the outer surface of the mounting frame 1. The radial boring 19 is adapted to accommodate a permanent magnet 43. Through this radial boring 19 the cavity can be filled with a ferromagnetic liquid 42, e.g. a suspension of carbonyl iron powder in a carrier liquid, wherein the carrier liquid can be water, ethylene glycol, or a mineral or synthetic oil. When a magnet 43 is then inserted into the radial boring 19, through the magnetic forces the ferromagnetic liquid 42 solidifies, thus fixing the optical element 2 in its adjusted orientation. When the magnet 43 is removed, the ferromagnetic liquid 42 becomes liquid again and the optical element 2 can be readjusted. Alternatively, the magnet 43 can be an electromagnet, for instance enclosed in the mounting frame 1, and be switched on or off. For example, this could be useful in applications in which frequent readjustments of the optical elements are necessary.

In Figure 5c the cavity is filled with a granular material 44 of specific grain size and particle form. The granular material 44 is filled into the circular boring 10 between steps S2 and S3, i.e. after the collet 3 is positioned and before the clamping nut 4 is positioned on the thread screw 14 and loosely threaded in. After the adjustment of the optical element 2 the clamping nut 4 is tightened. By threading in the clamping nut 4 the granular material 44 is compressed und thus immobilized. The compressed granular material 44 prevents a movement of the collet 3, thus fixing the optical element 2 in its adjusted orientation.

In Figures 6a-e five flow diagrams are shown that illustrate exemplary embodiments of the method for positioning and orienting the optical element 2. Figure 6a shows a first embodiment of the method, comprising five essential steps. In step S1 the optical element 2 is inserted into the collet 3. In step S2 the collet 3 is introduced into the opening 10 of the mounting frame 1. In step S5 the tilt orientation of the optical element 2 is adjusted by rotating the collet 3. In step S6 the adjusted tilt orientation of the optical element 2 is secured. In step S7 the clamping nut 4 is tightened on the thread screw 14.

Figures 6b and 6c show a second and a third embodiment of the method, wherein each method, compared with the first embodiment, comprises one or two additional steps after step S2. In Figure 6b after step S2 step S3 is executed: Subsequently to introducing the collet 3 into the opening 10, the clamping nut 4 is positioned loosely on the thread screw 4. In Figure 6c step S3 additionally is followed by step S4: The clamping nut 4 is threaded partially on the thread screw 14.

Figures 6d and 6e show a fourth and fifth embodiment of the method, wherein each method, compared with the embodiments illustrated in Figures 6a and 6c, respectively, comprises the additional step S8. In Figure 6d step S7 is followed by step S8: After tightening the clamping nut 4 on the thread screw 4, an immobilizing agent, in particular a liquid adhesive 41 or a ferromagnetic liquid 42, is filled into a cavity of the opening 10. In Figure 6e step S2 is followed by step S8: Subsequently to introducing the collet 3 into the opening 10, an immobilizing agent, in particular a granular material 44, is filled into the opening 10. The opening 10 then is closed by the clamping nut 4 with step S3.

Figure 7 shows the schematic diagram of an exemplary laser arrangement 90 in the form of an ultra-short pulse laser system for producing femto- and picosecond pulses as an example of a typical application for the support mechanism according to the invention. Each depicted optical element, i.e. all lenses 92 and mirrors 93,95-98 of the laser arrangement 90, can be held and adjusted by a support mechanism according to the invention and with the method according to the invention.

The depicted laser arrangement 90 has at least one pump source 91, in particular a laser diode source, for pumping an amplifying laser medium 94 for producing a laser emission, the pump beam path being led via a sequence of lenses 92 as an incoupling optical system and a dichroic pump mirror 93. The coupling-out of the useable laser emission AS is effected via an outcoupling mirror 95 downstream of the laser medium 94. In this example, Yb:KYW is used as laser medium 94, which is placed within the laser resonator with a plurality of curved or planar resonator mirrors 96, i.e. folding or end mirrors. The laser resonator also has two Herriot mirrors 97 and a saturable absorber mirror 98 as a component for producing mode coupling. These components present in the laser resonator, with their optical surfaces, can also be grouped and combined to give resonator elements as described in the EP 2 284 965.

The ultra-short pulse laser system shown by way of example is specifically in the form of a femtosecond laser with Yb:KYW or Yb:KGW as laser medium 94, with a laser diode at 980 nm as pump source 91. The saturable absorber mirror 98 serves for starting and stabilizing the mode coupling. The laser is operated in the soliton mode-coupling range and contains a number of laser folding mirrors 96 having a negative group velocity dispersion. It requires no external pulse compression, for example in contrast to the chirped-pulse mode. This and further laser arrangements can, however, also be formed, for example, as restorable amplifiers, i.e. as laser amplification arrangements.

Although the invention is illustrated above, partly with reference to some preferred embodiments, it must be understood that numerous modifications and combinations of different features of the embodiments can be made. All of these modifications lie within the scope of the appended claims.

## Claims

1. Support mechanism for holding and adjusting an optical element (2), the support mechanism comprising a mounting frame (1) having a hollow-cylindrical opening (10) with a first end and a second end for accommodating the optical element (2),
**characterized by**
• a thread screw (14) at the first end of the opening (10),
• a circular clamping nut (4) having an external thread, designed for being threaded onto the thread screw (14), and
• a circular collet (3) having a first part (31) for holding the optical element (2) and a second part (32) with a multitude of collet jaws (33),
wherein
• the clamping nut (4) and the collet (3) are designed for being positioned in the opening (10) in such a way that the optical element (2) is held fixedly in the collet (3), and
• a tilt orientation of the optical element (2) is adjustable by rotating the collet (3) and fixable.

2. Support mechanism according to Claim 1,
**characterized in that**
the opening (10) is a circular boring and/or comprises
• a conical necking (15) at the second end, designed for contacting the collet jaws (33) and obstructing a movement of the collet (3) beyond the second end, and
• an accommodation area (13) in between the first end and the second end, designed for accommodating the collet (3) holding the optical element (2).

3. Support mechanism according to Claim 1 or Claim 2,
**characterized in that**
• the first part (31) comprises
• a necked throat (34) for obstructing a movement of the optical element (2), so that the optical element (2) is prevented from leaving the collet (3) at the first part (31), and
• a circular contact surface (36) for contacting the optical element (2), and/or
• the collet jaws (33) are designed in such a way that
• the optical element (2) is prevented from leaving the collet (3) autonomously at the second part (32), and
• a tool (5) is insertable in clearances between the collet jaws (33) for adjusting a tilt orientation of the collet (3) when positioned in the opening (10) and for maintaining the tilt orientation.

4. Support mechanism according to any one of the preceding claims,
**characterized in that**
the clamping nut (4) is designed in such a way that an outer surface of the clamping nut (4)
• is positioned flush with a surface of the mounting frame (1), when the clamping nut (4) is tightened on the thread screw (14), and/or
• has a plurality of depressions and/or elevations, in particular designed for being engaged by a tool or an apparatus for rotating the clamping nut (4).

5. Support mechanism according to any one of the preceding claims,
**characterized in that**
the optical element (2), the collet (3) and the clamping nut (4) are designed to be arranged in the opening (10) in such a way that a cavity is formed in the opening (10), the cavity being fillable with an immobilizing agent (41, 42, 44).

6. Support mechanism according to Claim 5,
**characterized in that**
• at least one radial boring (18) connects an outer surface of the mounting frame (1) with the cavity, and the immobilizing agent is a liquid adhesive (41),
• at least one radial boring (19), designed for accommodating a permanent magnet (43), connects an outer surface of the mounting frame (1) with the cavity, and the immobilizing agent is a ferromagnetic liquid (42), or
• the immobilizing agent is a granular material (44), particularly of specific grain size and particle form.

7. Support mechanism according to any one of the preceding claims,
**characterized in that**
the optical element (2)
• has a circular cross-section, in particular being basically cylindrically,
• comprises an optical lens, a mirror or a prism, and/or
• is designed for use in a laser arrangement (90) and/or application.

8. Support mechanism according to any one of the preceding claims,
**characterized in that**
• the mounting frame (1) comprises attaching means (16) for attaching it to a surface (6), in particular by means of screws, bolts, welding and/or gluing,
• the mounting frame (1) at least partially, in particular the hollow-cylindrical opening (10), is hard anodised and/or ceramic-coated, and/or
• the collet (3) is vacuum hardened.

9. Method for positioning and orienting an optical element (2) in a mounting frame (1), the mounting frame (1) having a hollow-cylindrical opening (10) for accommodating the optical element (2), the opening (10) comprising a thread screw (14) at a first end,
**characterized by**
• inserting (S1) the optical element (2) into a collet (3) having a first part (31) for holding the optical element (2) and a second part (32) with a multitude of collet jaws (33),
• introducing (S2) the collet (3) into the opening (10),
• adjusting (S5) a tilt orientation of the optical element (2) by rotating the collet (3) in the opening (10), and
• fixing the adjusted tilt orientation of the optical element (2), wherein the fixing comprises securing (S6) an actual tilt orientation of the collet (3) and tightening (S7) a clamping nut (4) on the thread screw (14).

10. Method according to Claim 9,
**characterized in that**
by tightening (S7) the clamping nut (4) a radial force (F₃) is exerted on the first part (31) of the collet (3), in particular wherein the radial force (F₃) compresses the collet (3) around the optical element (2).

11. Method according to Claim 9 or Claim 10,
**characterized in that**
adjusting (S5) and/or securing (S6) the tilt orientation of the collet (3) comprises inserting a tool (5) into clearances between the collet jaws (33), in particular wherein the tool (5)
• is a forklike tool,
• has one or more tines, spikes or prongs, and/or
• is rotatable by means of a motor.

12. Method according to any one of claims 9 to 11,
**characterized by**
positioning (S3) the clamping nut (4) on the thread screw (14) before adjusting (S5) a tilt orientation of the optical element (2).

13. Method according to Claim 12,
**characterized by**
threading in (S4) the clamping nut (4) at least partially on the thread screw (14),
in particular wherein through threading in (S4) and/or tightening (S7) the clamping nut (4)
• a first axial force (F₁) is exerted on the collet (3) in a first axial direction, pushing the collet jaws (33) against a first counterpart, and
• the first axial force (F₁) is transformed by means of the collet jaws (33) and the first counterpart into a second axial force (F₅) pushing the optical element (2) within the collet (3) in a second axial direction against a second counterpart.

14. Method according to any one of claims 9 to 13,
**characterized in that**
the fixing of the adjusted tilt position comprises filling (S8) a cavity with an immobilizing agent (41, 42, 44),
in particular wherein the cavity is formed through the arrangement of the optical element (2), the collet (3) and the clamping nut (4) in the opening (10).

15. Method according to Claim 14,
**characterized in that**
the fixing of the adjusted tilt position comprises
• filling a liquid adhesive (41) through at least one radial boring (18) that connects the outer surface of the mounting frame (1) with the cavity,
• filling a ferromagnetic liquid (42) through at least one radial boring (19) that is designed for accommodating a permanent magnet (43) and connects the outer surface of the mounting frame (1) with the cavity, and inserting a permanent magnet (43) into at least one radial boring (19), or
• filling a granular material (44), particularly of specific grain size and particle form, into the opening (1) after introducing (S2) the collet (3) into the opening (10).
